(19) **Europäisches Patentamt / European Patent Office / Office européen des brevets**

(11) **EP 1 399 722 B1**

(12) **FASCICULE DE BREVET EUROPEEN**

(45) Date de publication et mention
de la délivrance du brevet:
**30.01.2008 Bulletin 2008/05**

(21) Numéro de dépôt: **02751266.4**

(22) Date de dépôt: **18.06.2002**

(51) Int Cl.:
*G01J 5/40* *(2006.01)*     *G01J 5/20* *(2006.01)*

(86) Numéro de dépôt international:
**PCT/FR2002/002096**

(87) Numéro de publication internationale:
**WO 2003/002963 (09.01.2003 Gazette 2003/02)**

(54) **MICROBOLOMETRE ET SON PROCEDE DE FABRICATION**

MIKROBOLOMETER UND VERFAHREN ZU DESSEN HERSTELLUNG

MICROBOLOMETER AND METHOD FOR MAKING SAME

(84) Etats contractants désignés:
**DE GB IT**

(30) Priorité: **28.06.2001 FR 0108552**

(43) Date de publication de la demande:
**24.03.2004 Bulletin 2004/13**

(73) Titulaire: **COMMISSARIAT A L'ENERGIE
ATOMIQUE**
**75015 Paris (FR)**

(72) Inventeur: **VILAIN, Michel**
**F-38450 Saint-Georges de Commiers (FR)**

(74) Mandataire: **Quantin, Bruno Marie Henri
Santarelli
14 Avenue de la Grande Armée
B.P. 237
75822 Paris Cedex 17 (FR)**

(56) Documents cités:
**WO-A-00/40938          US-A- 6 080 988**

## Description

L'invention se rapporte à la fabrication de microbolomètres, et de détecteurs de rayonnement comprenant un ensemble de microbolomètres.

Un bolomètre est un dispositif conçu pour mesurer l'intensité d'un rayonnement, habituellement situé dans l'infrarouge, auquel il est soumis, en transformant l'énergie de ce rayonnement en énergie thermique.

On connaît, d'après le brevet US-6,080,988, un détecteur de rayonnement infrarouge comprenant, d'une part, une partie suspendue au-dessus d'un substrat et apte à se déformer sous l'effet d'une élévation de température due à l'absorption par le détecteur d'un rayonnement infrarouge incident, et d'autre part une source de lumière visible émettant un rayon lumineux dirigé vers cette partie suspendue ; la déformation de la partie suspendue quand sa température varie cause la déviation du rayon lumineux réfléchi. On déduit de cette déviation la valeur cherchée de l'intensité du rayonnement infrarouge.

On connaît également, d'après la demande WO-00/40938, un bolomètre composé par une partie centrale mobile maintenue au-dessus d'un substrat au moyen de deux bras de suspension élastiques, chacun de ces bras de suspension étant fixé à son autre extrémité à un plot d'ancrage ; chaque bras de suspension comprend deux couches longitudinales superposées faites de deux matériaux de coefficients de dilatation thermique différents, de sorte que les bras de suspension sont aptes à se déformer sous l'effet d'une élévation de température due à l'absorption par le bolomètre d'un rayonnement infrarouge incident ; la partie mobile comprend un premier « élément de contrôle », et le substrat comprend un second « élément de contrôle », ces éléments de contrôle étant soumis à un stimulus de compensation provenant d'une source externe qui annule l'effet de déformation lorsque la température varie. On déduit de l'intensité du stimulus de compensation la valeur cherchée de l'intensité du rayonnement infrarouge.

Dans d'autres bolomètres connus, l'échauffement du bolomètre cause la variation de la resistance électrique d'un conducteur connecté à un circuit extérieur au bolomètre. Dans le cas par exemple d'un détecteur comprenant une matrice de microbolomètres, ce circuit électrique, dit « de lecture », prend en charge les fonctions d'adressage matriciel et les stimuli de lecture envoyés à chaque microbolomètre, et convertit les signaux résultants sous un format notamment exploitable pour l'imagerie (par exemple sous forme de signal vidéo). Pour obtenir les meilleures performances possibles, on fait fonctionner les microbolomètres sous une pression de gaz relativement faible (ou sous pression modérée d'un gaz à faible conductivité thermique), afin que la dissipation thermique due à ce gaz soit négligeable devant la conductance thermique intrinsèque des microbolomètres.

Le circuit de lecture mesure la variation relative de la résistance électrique (attachée à l'élément sensible du bolomètre) qui dépend de la température. Dans le cas des détecteurs non refroidis (plus simples et moins coûteux que les détecteurs équipés d'un système de refroidissement), la variation de température du bolomètre est quant à elle proportionnelle à la puissance de rayonnement reçue, la constante de proportionnalité (appelée « résistance thermique » et que nous désignerons par $R_{thb}$) étant habituellement comprise entre $5.10^6$ et $2.10^7$ K/W.

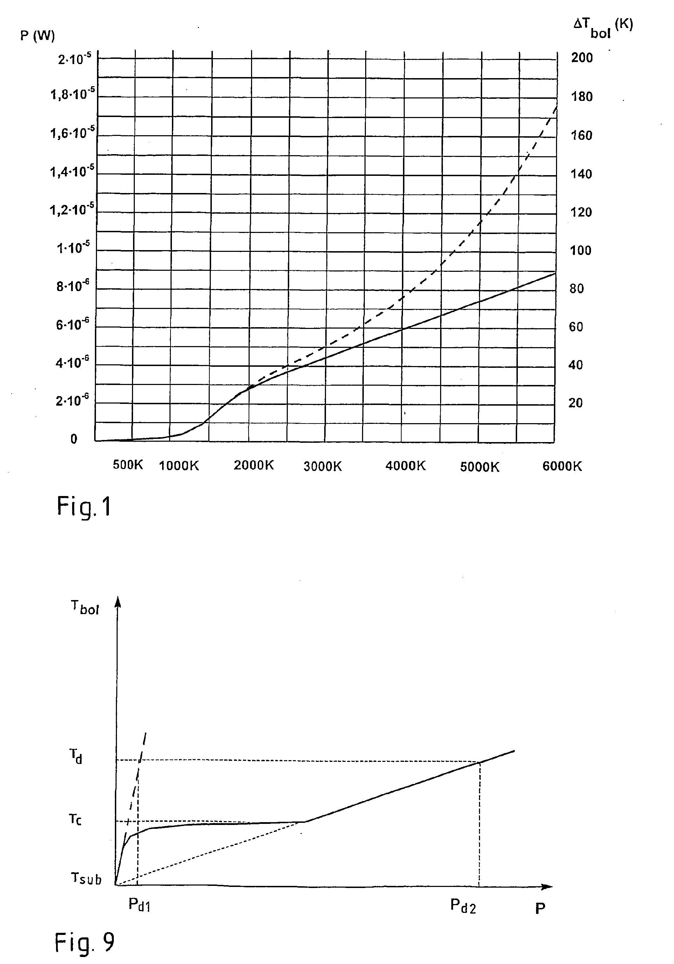

La **figure 1** se rapporte à un microbolomètre classique d'aire utile 40 $\mu$m x 30 $\mu$m, de résistance thermique $R_{thb}$ égale à $10^7$ K/W et d'absorption unité, placé au foyer d'une optique présentant un angle d'ouverture de 53° munie d'un filtre spectral offrant une transmission constante égale à 0,9 dans l'infrarouge (plus précisément, dans une gamme de longueurs d'onde comprises entre 8 et 14 $\mu$m). Les courbes représentent la puissance de rayonnement reçue et l'accroissement de température du microbolomètre en l'infrarouge (plus précisément, dans une gamme de longueurs d'onde comprises entre 8 et 14 $\mu$m). Les courbes représentent la puissance de rayonnement reçue et l'accroissement de température du microbolomètre en fonction de la température de la source de rayonnement, considérée comme un « corps noir ». Cet échauffement se produit même si le système d'imagerie n'est pas en marche (c'est-à-dire en l'absence de stimuli électriques).

Pour un microbolomètre muni d'un filtre spectral « parfait », c'est-à-dire présentant une transmission nulle pour toutes les longueurs d'onde en-dehors de la gamme précitée, la croissance de la température d'équilibre du microbolomètre avec la température de la source (courbe en traits pleins) est linéaire dès que cette dernière dépasse 2000 K. Par exemple, l'observation statique d'une source telle que le soleil (environ 6000 K), provoque un accroissement de température du microbolomètre de l'ordre de 100 K.

En pratique, les filtres spectraux, même de bonne qualité, installés sur les systèmes d'imagerie infrarouge ne sont pas parfaits, en ce sens qu'ils laissent passer une puissance faible, mais non nulle, de rayonnement aux longueurs d'onde situées en dehors de la plage théorique de fonctionnement du filtre. Or les sources très chaudes émettent beaucoup plus de puissance dans la gamme visible que dans l'infrarouge. De ce fait, la puissance optique reçue sur le détecteur, hors gabarit infrarouge du filtre, peut être importante, et même le cas échéant prépondérante à très haute température de source, et/ou pour des filtres de qualité médiocre. Dans ce cas, l'estimation d'échauffement indiquée précédemment peut être largement inférieure à la réalité. La courbe en tirets de la figure 1 montre la variation effective de température du microbolomètre quand il est muni d'un filtre « non parfait » présentant une transmission égale à $10^{-3}$ en-dehors de la gamme infrarouge précitée. Bien entendu, l'utilisation de résistances thermiques plus élevées, avantageuse dans les conditions normales d'utilisation puisqu'elle augmente la sensibilité du microbolomètre, entraîne un échauffement encore plus important.

Or les microbolomètres sont habituellement conçus pour fonctionner, et c'est un de leurs intérêts, au voisinage de la température ambiante. Mais ces microbolomètres sont constitués de matériaux (tels que les oxydes de vanadium ou le silicium amorphe) qui présentent une altération de leurs caractéristiques électriques (et aussi éventuellement une déformation mécanique de leur structure) permanente, ou au moins durable, pour de telles élévations de température, même temporaires. Les très forts éclairements peuvent même conduire à leur destruction physique.

De plus, même si les microbolomètres temporairement sur-éclairés ne sont pas détruits, une altération même temporaire des valeurs de résistance électrique des points d'image (probable ou inévitable au-delà de 100 à 200 K d'échauffement, pour la plupart des microbolomètres) rend inopérant le dispositif électronique de compensation de « décalage » (« offset» en anglais) habituellement intégré au circuit de lecture, qui a été calibré pour la distribution spatiale originale des résistances individuelles sur le microbolomètre.

Il en résulte que l'observation, même transitoire (sur une durée de l'ordre de la constante de temps thermique du microbolomètre, soit habituellement de quelques millisecondes à quelques dizaines de millisecondes) de sources très chaudes, par exemple le filament d'une lampe à incandescence (environ 3000 K), ou le soleil, est ordinairement fatale pour ce type de dispositifs.

Les systèmes d'imagerie à base de détecteurs de type bolométrique selon l'état de l'art n'étant pas compatibles avec l'observation, même temporaire ou accidentelle, de sources très intenses, il est nécessaire de limiter l'usage de ces systèmes à des environnements par essence peu agressifs, ou de prendre des précautions contraignantes lors de l'utilisation de tels systèmes.

L'invention a pour objet de proposer des microbolomètres présentant une vulnérabilité aux sur-éclairements moindre que les microbolomètres classiques grâce à une extension de la plage d'intensités de rayonnement admissibles, sans diminuer pour autant la sensibilité du dispositif aux intensités de rayonnement modérées.

Dans ce but, l'invention propose un procédé de fabrication de microbolomètres sur un substrat chaque microbolomètre comprenant un élément sensible dont la résistance électrique varie avec la température résultant du rayonnement auquel il est soumis, chaque microbolomètre étant apte à mesurer la variation relative de ladite résistance électrique, ledit procédé étant remarquable en ce qu'il comprend pour chaque microbolomètre, les étapes suivantes :

- le dépôt et la gravure de plusieurs couches, dont un ensemble de couches destiné à constituer une partie suspendue du microbolomètre contenant un élément sensible aux rayonnements, et

- la formation dans ladite partie suspendue d'un ensemble de premières zones et d'un ensemble de secondes zones, les deux ensembles étant superposés,

et en ce que les matériaux constituant lesdites premières zones possèdent des coefficients de dilatation thermique suffisamment différents des matériaux constituant lesdites secondes zones pour que la partie suspendue se déforme sous l'effet d'une élévation de température au point de venir au contact du substrat lorsque la zone de contact atteint une température $T_c$ inférieure à la température de destruction $T_d$ du microbolomètre.

Grâce à ces dispositions, à partir du moment où la partie suspendue du microbotomètre, en cours d'utilisation, atteint ladite température $T_c$, cette partie se refroidit du fait de son contact avec le substrat. Les microbolomètres selon l'invention peuvent par conséquent supporter une gamme de températures de scène considérablement étendue par rapport aux microbolomètres selon l'art antérieur.

On notera que les microbolomètres selon l'invention peuvent être intégralement fabriqués à l'aide de techniques relevant de la microélectronique, et ce de manière collective.

Corrélativement, l'invention concerne un microbolomètre comportant une partie suspendue contenant un élément sensible dont la résistance électrique varie avec la température résultant du rayonnement auquel il est soumis, le microbolomètre étant apte à mesurer la variation relative de ladite résistance électrique, ledit microbolomètre étant remarquable en ce que ladite partie suspendue est constituée d'un ensemble de premières zones et d'un ensemble de secondes zones; les deux ensembles étant superposés, et en ce que les matériaux constituant lesdites premières zones possèdent des coefficients de dilatation thermique suffisamment différents des matériaux constituant lesdites secondes zones pour que ladite partie suspendue se déforme sous l'effet d'une élévation de température au point de venir au contact du substrat lorsque la zone de contact atteint une température $T_c$ inférieure à la température de destruction $T_d$ du microbolomètre.

Ainsi, les microbolomètres selon l'invention comportent, de par leur constitution même, les éléments propres à leur protection contre les hautes températures de scène.

Lesdites premières zones pourront, selon les besoins particuliers de l'homme du métier, être situées soit « au-dessous » soit « au-dessus » desdites secondes zones. Compte tenu que les premières zones peuvent, au choix, posséder un coefficient de dilatation thermique inférieur ou supérieur à celui des secondes zones, la partie suspendue du microbolomètre selon l'invention se déformera sous l'effet d'un accroissement de température selon une forme qui pourra être convexe ou concave.

Selon des caractéristiques préférées, le microbolomètre selon l'invention présentera des protubérances émergeant de la partie suspendue et tournées vers le substrat, et/ou des protubérances émergeant du substrat et tournées vers la partie suspendue.

Grâce à ces dispositions, lorsque la partie suspendue vient, conformément à l'invention, au contact du substrat, les zones de contact effectives se trouvent limitées au sommet desdites protubérances. On évite ainsi que la partie suspendue n'adhère trop fortement au substrat, et l'on facilite donc le retour de la partie suspendue vers sa position nominale lorsque le microbolomètre se refroidit.

Selon d'autres caractéristiques préférées, la partie suspendue du microbolomètre comprend des bras de maintien reposant localement sur le substrat par l'entremise de piliers.

Grâce à ces dispositions, la partie suspendue est fermement retenue, même quand elle se déforme sous l'effet d'un accroissement de température, par ces bras de maintien, qui, quant à eux, se dilateront relativement peu puisque l'une de leurs extrémités est maintenue à la température du substrat par l'intermédiaire desdits piliers.

On notera enfin que, selon les choix de matériaux et de structure faits par l'homme du métier, la zone de la partie suspendue du microbolomètre destinée à venir au contact du substrat à la température $T_c$ pourra comprendre le centre de la partie suspendue, ou pourra être éloignée de ce centre.

L'invention concerne aussi des détecteurs de rayonnement comprenant chacun un ensemble de microbolomètres tels que décrits succinctement ci-dessus, et divers appareils d'observation ou de mesure incorporant au moins un tel détecteur de rayonnement. Ces appareils peuvent par exemple être des systèmes d'imagerie opérant dans l'infrarouge.

D'autres aspects et avantages de l'invention apparaîtront à la lecture de la description détaillée, que l'on trouvera ci-dessous, de modes particuliers de réalisation donnés à titre d'exemples non limitatifs. Cette description se réfère aux dessins annexés, dans lesquels :

- la figure 1 représente la température atteinte par un microbolomètre classique en fonction de la température de corps noir de la source,
- la figure 2a est une vue de dessus de l'ensemble obtenu après une première étape dans la fabrication de microbolomètres selon un premier mode de réalisation de l'invention,
- la figure 2b est une vue en coupe selon la ligne AA de l'ensemble illustré sur la figure 2a,
- la figure 3a est une vue de dessus de l'ensemble obtenu après une deuxième étape dans la fabrication de microbolomètres selon le premier mode de réalisation de l'invention,
- la figure 3b est une vue en coupe selon la ligne AA de l'ensemble illustré sur la figure 3a,
- la figure 4a est une vue de dessus de l'ensemble obtenu après une troisième étape dans la fabrication de microbolomètres selon le premier mode de réalisation de l'invention,
- la figure 4b est une vue en coupe selon la ligne AA de l'ensemble illustré sur la figure 4a,
- la figure 5a est une vue de dessus de l'ensemble obtenu après une quatrième étape dans la fabrication de microbolomètres selon le premier mode de réalisation de l'invention,
- la figure 5b est une vue en coupe selon la ligne AA de l'ensemble illustré sur la figure 5a,
- la figure 6a est une vue de dessus de l'ensemble obtenu après une cinquième et dernière étape dans la fabrication de microbolomètres selon le premier mode de réalisation de l'invention,
- la figure 6b est une vue en coupe selon la ligne AA de l'ensemble illustré sur la figure 6a,
- les figures 7a et 7b illustrent le fonctionnement d'un microbolomètre construit selon le premier mode de réalisation de l'invention, la figure 7a étant une vue de dessus et la figure 7b une vue en coupe selon la ligne AA de la figure 7a,
- les figures 8a et 8b illustrent le fonctionnement d'un microbolomètre construit selon un deuxième mode de réalisation de l'invention, la figure 8a étant une vue de dessus et la figure 8b une vue en coupe selon la ligne AA de la figure 8a, et
- la figure 9 est un graphique de la température atteinte par un microbolomètre selon l'invention en fonction de la puissance du rayonnement reçu.

On va décrire pour commencer les étapes successives d'un procédé de fabrication de microbolomètres selon un premier mode de réalisation de l'invention.

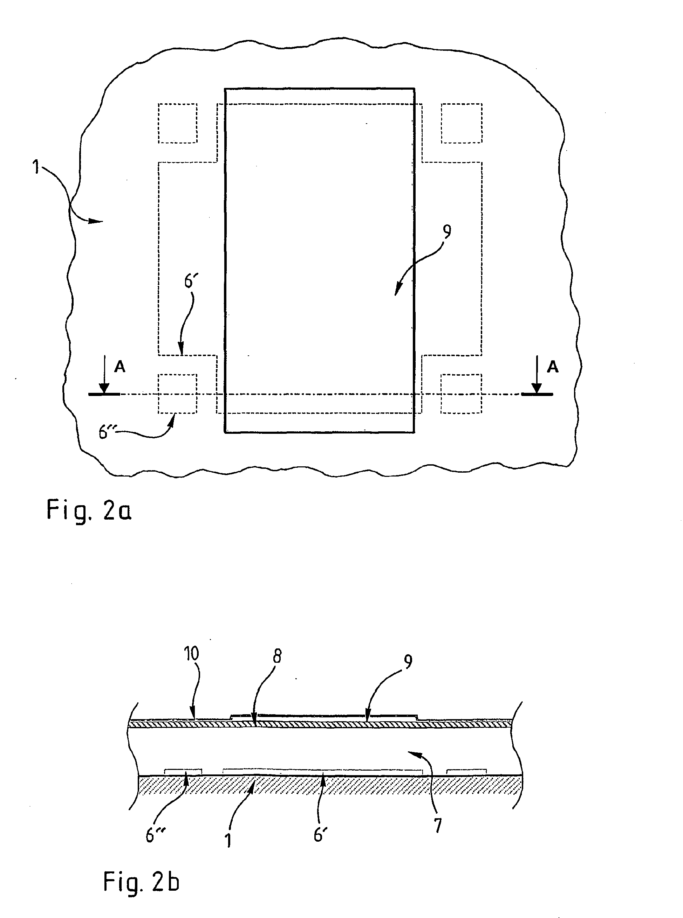

Les figures 2a et 2b présentent respectivement une vue de dessus et une coupe locale de l'ensemble obtenu après une première étape de ce procédé.

Au départ, on dispose de manière classique, dans un substrat 1 (habituellement de silicium, et de quelques μm d'épaisseur), des circuits électriques (non représentés) aptes à fournir, d'une part, les stimuli de lecture pour les microbolomètres, et d'autre part le traitement du signal résultant de l'éclairement de ces microbolomètres à travers une optique adaptée.

Les microbolomètres sont disposés habituellement de manière à former une matrice ou une barrette. La dimension habituelle d'un microbolomètre élémentaire dans chaque direction parallèle au substrat 1 est ordinairement de l'ordre de 20 à 50 μm.

Les procédés de fabrication classiques de détecteurs de ce type comprennent des étapes initiales réalisées directement à la surface d'un circuit électrique, de manière dite monolithique (c'est-à-dire dans une séquence continue d'opérations sur le même substrat) ou hybride (avec report sur un substrat d'éléments préfabriqués). Ces étapes font intervenir des techniques usuelles de l'industrie microélectronique, notamment des techniques de fabrication collective, concernant habituellement quelques dizaines à quelques centaines de détecteurs disposés sur un même substrat (« *wafer level* » en anglais). Au cours de ces étapes initiales, on met en place les organes proprement bolométriques assurant les fonctions d'absorption optique et de résistance variable avec la température, à la surface d'une couche « sacrificielle », en ce sens que cette couche (ordinairement faite de polyimide, de silicium polycristallin, ou de métal tel que du cuivre ou de l'aluminium) est éliminée en fin de processus (par combustion dans un plasma d'oxygène par exemple dans le cas du polyimide), de manière à laisser les structures du microbolomètre suspendues au-dessus du substrat.

Grâce à ce procédé d'élaboration, on peut maintenir l'espacement entre deux microbolomètres voisins à une cote minimale, de manière à permettre leur séparation physique et électrique avec un taux de remplissage (« *fill factor* » en anglais) maximal.

On supposera pour simplifier la présente description que chaque microbolomètre ne présente aucune partie commune avec les microbolomètres voisins. Dans les autres cas, l'homme du métier saura adapter les étapes de fabrication en faisant usage de ses capacités ordinaires.

Conformément à l'art établi, on dépose sur le substrat 1 une couche métallique 6, par exemple en aluminium, qui est définie par gravure suivant, par exemple, le contour indiqué sur la figure 2a (trait pointillé) grâce à un premier masque lithographique. Cette couche 6 comprend une ou plusieurs parties 6' dont le rôle est de réfléchir le rayonnement infrarouge traversant le microbolomètre afin d'améliorer son rendement d'absorption, et plusieurs parties 6" servant de points de contact électrique avec le circuit de lecture logé dans le substrat 1.

On dépose ensuite une couche sacrificielle 7, par exemple de polyimide, qu'on recuira à une température suffisante pour qu'elle puisse supporter la suite des opérations. De préférence, cette couche 7 aura environ 2,5 μm d'épaisseur, afin d'optimiser le rendement optique du bolomètre (par constitution d'une cavité « quart d'onde » après élimination de cette couche sacrificielle) pour des longueurs d'onde comprises dans le domaine infrarouge.

Selon ce premier mode de réalisation de l'invention, on dépose ensuite sur cette couche 7 une couche 8 de matériau sensible aux variations de température, par exemple 1000 Å de silicium amorphe, de résistivité adéquate, puis une couche 9 d'un matériau isolant électrique tel que l'oxyde de silicium, de 50 à 200 Å d'épaisseur par exemple.

Cette couche 9 est ensuite gravée en regard de la zone 6' à l'aide d'un second masque lithographique, selon le contour illustré par un trait plein sur la figure 2a. On dépose ensuite une couche 10 qui recouvre à la fois la couche gravée 9, et la couche 8 au-delà de la couche gravée 9. Cette couche 10, qui est faite d'un matériau métallique tel que le nitrure de titane TiN, fournira les électrodes de la partie sensible du microbolomètre, et servira également d'absorbeur infrarouge. Afin d'optimiser le rendement du microbolomètre, elle présentera de préférence une résistance de couche d'environ 400 Ω, ce qui correspond habituellement à une épaisseur inférieure à 100 Å.

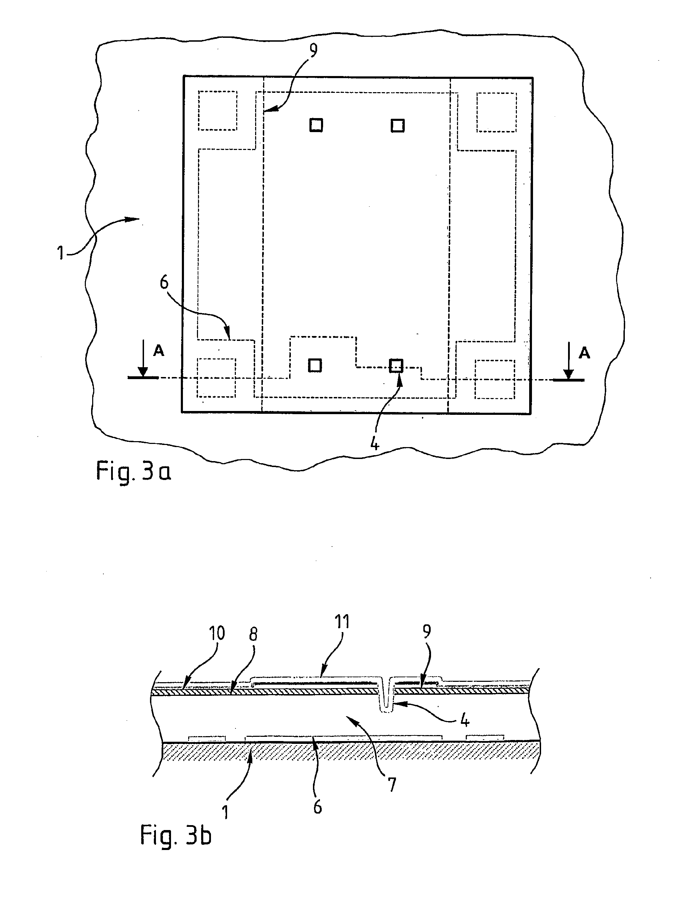

Dans une deuxième étape de ce mode de réalisation, illustrée sur les **figures 3a et 3b,** on grave à l'aide d'un troisième masque lithographique, par un procédé de gravure sèche adéquat, les couches 10, 9, et 8, puis une partie de la couche 7. On dépose ensuite sur la couche 10 et dans les zones gravées une couche métallique 11, de préférence en aluminium et d'épaisseur comprise entre 500 et 2000 Å.

Cette gravure définit au moins une première ouverture en regard d'une zone 6', de dimensions relativement réduites devant les dimensions du microbolomètre. Comme on peut le voir sur la figure 3b, la profondeur de gravure dans la couche 7 définit la hauteur de protubérances 4 de la couche 11 associées à ces premières ouvertures. Cette hauteur sera de préférence comprise entre de 0,5 μm et 1,5 μm, afin de laisser une marge suffisante entre l'extrémité des protubérances 4 et la surface de la couche 6.

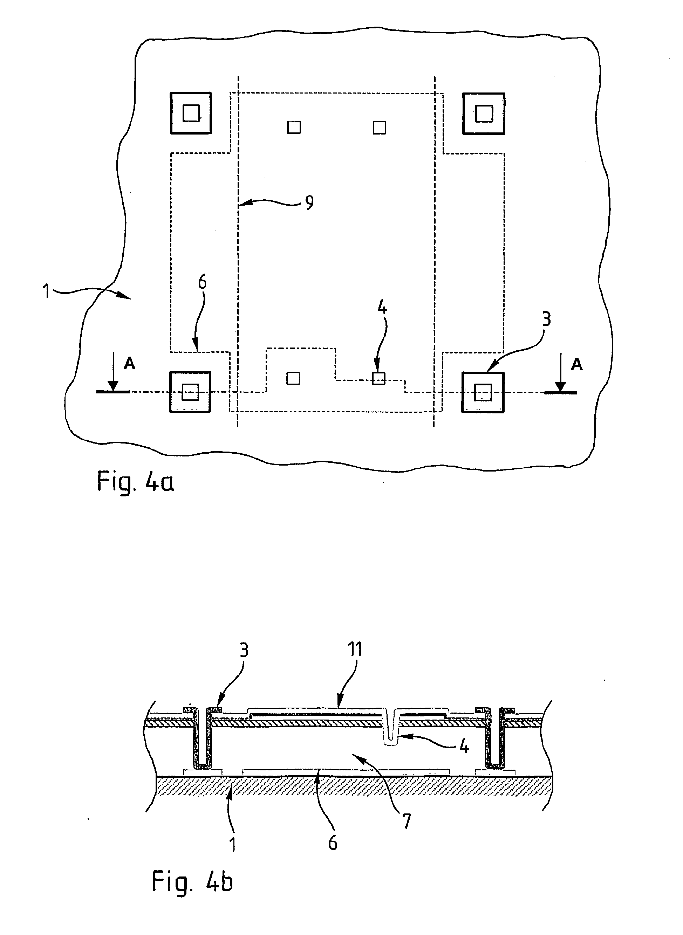

Lors d'une troisième étape, représentée sur les figures 4a et 4b, on définit, à l'aide d'un quatrième masque lithographique, des secondes ouvertures situées en regard des zones 6" et qui permettront, à l'aide d'un procédé de gravure sèche adapté, de graver les couches 11, 10, 8, et 7 sur toute leur épaisseur jusqu'à déboucher sur la surface des couches 6".

Le choix de l'aluminium pour la couche 11 permet d'utiliser ce dernier comme contre-masque minéral pour la gravure de cette séquence de matériaux.

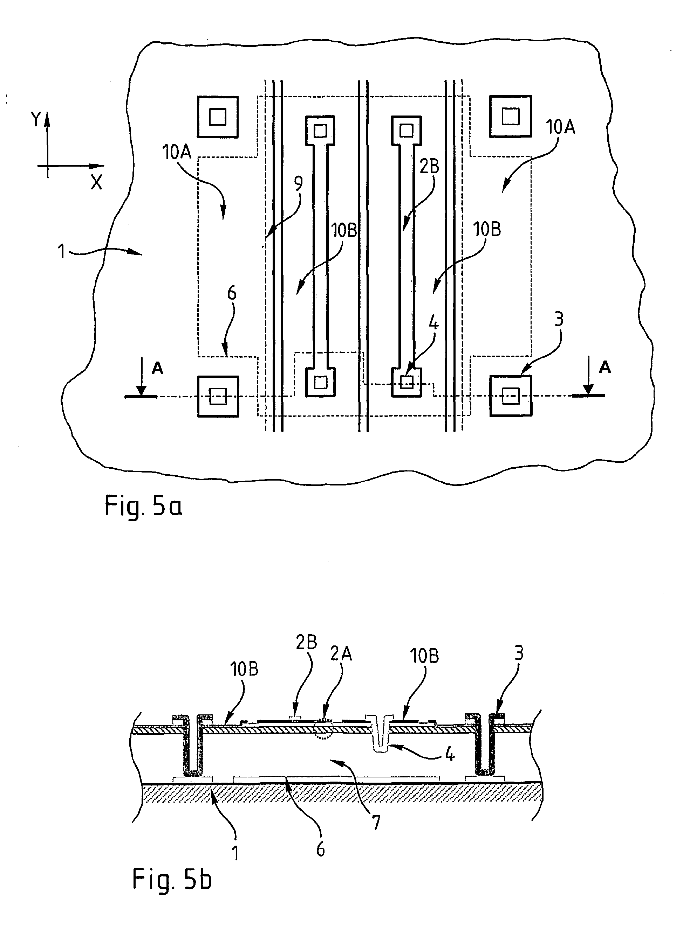

On dépose ensuite au moins une couche essentiellement métallique, afin de réaliser des parties 3 associées auxdites secondes ouvertures. Ces parties 3 sont délimitées en surface par gravure à l'aide d'un cinquième masque lithographique représenté sur la figure 4a. On vient de réaliser des piliers de maintien de la structure mécanique, ainsi que les connexions électriques entre le circuit de lecture et les futures électrodes (voir figures 5a et 5b) du microbolomètre.

On a choisi, dans ce mode de réalisation, un dessin à quatre piliers 3, mais d'autres choix sont possibles, en gardant à l'esprit la nécessité de produire des structures relativement rigides, comme expliqué plus bas.

Lors d'une quatrième étape, on utilise un sixième masque lithographique pour définir par gravure chimique des motifs dans la couche 11, comme représenté sur les figures 5a et 5b. Ces motifs comprennent au moins une surface 2B au dessin essentiellement allongé, dont la direction est indiquée par l'axe Y sur les figures, et dont les extrémités se situent au niveau des protubérances 4, qui doivent donc être protégées, ainsi qu'accessoirement les zones 3, lors de cette gravure chimique.

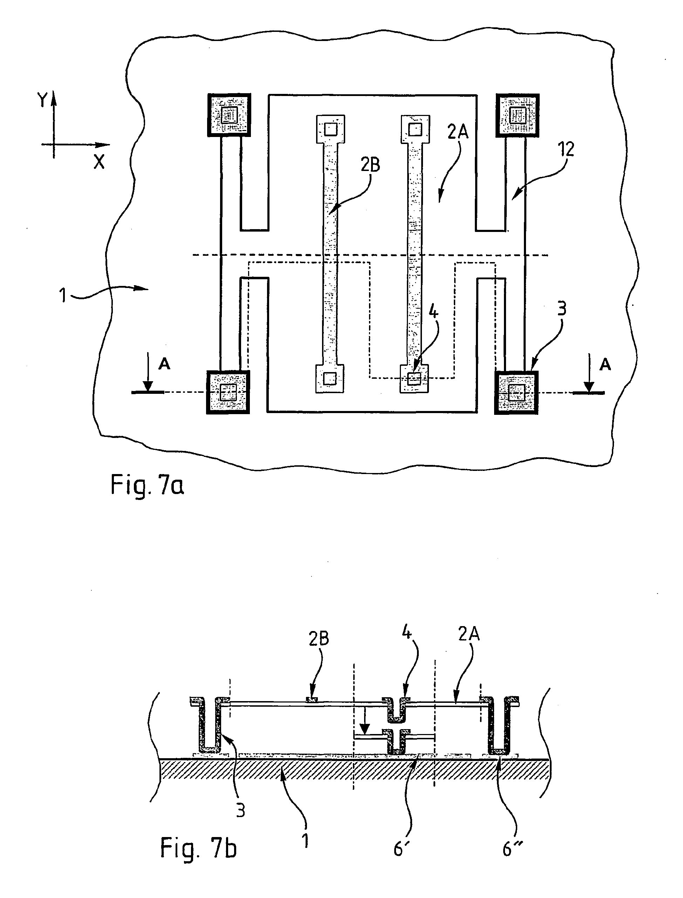

L'ensemble des couches 8, 9, et 10, (essentiellement la couche 8 dans ce mode de réalisation) définit une partie 2A, qui, conformément à l'invention, présente un coefficient de dilatation thermique sensiblement différent de celui de la partie 2B, les parties 2A et 2B étant superposées et formant ensemble la partie suspendue 2 du microbolomètre. Si, par exemple, on utilise de l'aluminium pour les parties 2B, celles-ci posséderont un coefficient de dilatation thermique égal à 25 ppm/K, alors que le silicium dont est fait la couche 8 possède un coefficient de dilatation thermique égal à 5 ppm/K. On pourra en variante choisir de réaliser les parties 2B en d'autres matériaux présentant les mêmes propriétés, tels que le nitrure de silicium, le nitrure de titane, le tungstène ou le siliciure de tungstène ; ce faisant, on privilégiera les matériaux offrant un module d'élasticité élevé, par comparaison avec les matériaux constituant les parties 2A, afin de favoriser la déformation de la structure globale sous l'effet de la chaleur, comme décrit plus bas en référence aux figures 7a et 7b.

A l'aide d'un septième masque lithographique, on grave ensuite localement la couche métallique 10 de manière à la séparer en parties formant électrodes 10A, situées notamment au niveau des zones 3, et en parties formant absorbeur infrarouge 10B, comme le montrent les figures 5a et 5b. On notera que dans cet exemple de réalisation, les parties 2B sont en contact électrique, d'une part, avec les parties 10B sur toute leur surface, et d'autre part avec l'élément sensible 8 du détecteur par l'entremise des protubérances 4. C'est la raison pour laquelle on doit, dans ce mode de réalisation, séparer le conducteur 10B en zones électriquement isolées contenant chacune une seule partie 2B, afin d'éviter de court-circuiter cet élément sensible (résistance électrique) 8. La figure 5a montre (en traits pleins) les zones de séparation entre les parties 10A et 10B, ainsi qu'entre les parties 10B elles-mêmes, toutes ces zones de séparation étant ici orientées parallèlement à l'axe Y.

D'autres contours auraient pu être retenus pour les divers polygones définis par le septième masque, aussi bien pour les polygones reliés au circuit de lecture (tels que 10A), que pour le ou les polygones à potentiel flottant (tels que 10B), à condition naturellement que les points mis en court-circuit par la ou les zones 2B soient équipotentiels. Dans le cas contraire, l'homme de l'art saura prendre les précautions nécessaires pendant l'assemblage, en intercalant par exemple une couche diélectrique d'isolement au bon endroit, ou même en utilisant un matériau isolant pour les parties 2B.

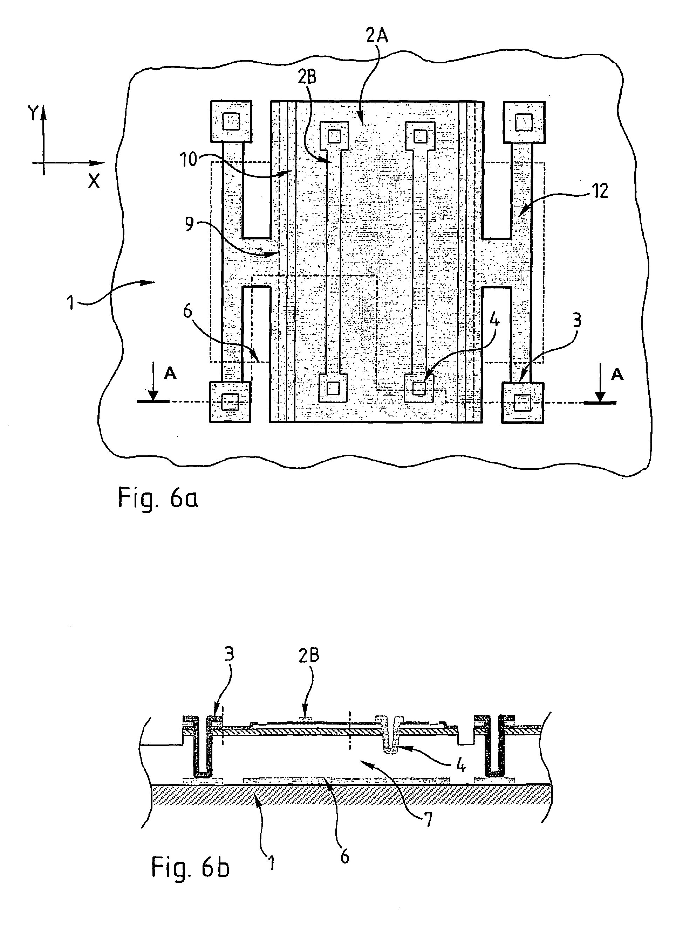

Enfin, lors d'une cinquième étape, on utilise un huitième et dernier masque lithographique pour définir le contour final des microbolomètres par gravure sèche des couches 10A et 8 (ainsi que partiellement de la couche 7), comme représenté sur les figures 6a et 6b. Ce contour préserve la partie centrale 10B, optiquement active, du microbolomètre, et définit des bras d'isolation thermique 12 (au nombre de quatre dans cet exemple de réalisation), qui ont un effet important sur la valeur prise par la résistance thermique $R_{thb}$ «propre» du microbolomètre, c'est-à-dire de sa partie suspendue. Dans ce premier mode de réalisation, ces bras 12 s'étendent parallèlement à l'axe Y, à gauche et à droite, et de part et d'autre, de la partie médiane de la partie suspendue 2.

Cette suite d'étapes de fabrication se termine par l'élimination de la couche sacrificielle 7 par oxydation sèche, selon des techniques bien connues.

On a ainsi obtenu, grâce à ce procédé selon l'invention, un microbolomètre comportant une partie suspendue 2 contenant un élément sensible aux rayonnements et constituée d'un ensemble de premières zones 2A et d'un ensemble de secondes zones 2B, les deux ensembles étant superposés, et les matériaux constituant les premières zones 2A possédant des coefficients de dilatation thermique sensiblement différents.

Le fonctionnement d'un microbolomètre selon ce premier mode de réalisation de l'invention est illustré sur les figures 7a et 7b.

La température du substrat $T_{sub}$ est généralement contrôlée par un système adéquat, à une température modérée (ordinairement, légèrement supérieure à la température ambiante) pour des raisons de stabilité temporelle des points de fonctionnement électrique du circuit de lecture et des microbolomètres (hors fonctionnement, la température $T_{sub}$ est simplement égale à la température ambiante). La température des microbolomètres dépend de la température de la source observée, comme on l'a mentionné en introduction, ainsi que du mode de lecture (c'est-à-dire de la façon d'appliquer les stimuli de lecture de la température, via le circuit électrique). En général, la température moyenne $T_{bol}$ des microbolomètres sera plus élevée que celle du substrat, la différence allant de quelques degrés à quelques dizaines de degrés.

En cas d'échauffement excessif, par exemple dû à un sur-éclairement transitoire ou durable, les bras 12 se dilateront relativement peu, grâce au choix des matériaux constitutifs, et aussi parce qu'une de leurs extrémités est maintenue à la température du substrat par l'intermédiaire des piliers 3. On peut considérer, en première approximation, que l'ensemble des structures comprenant les piliers 3, les bras de maintien 12, et les zones de raccordement à gauche et à droite de la zone centrale du microbolomètre sur la figure 7a, ne subit pas de déformation. Il en va de même, par symétrie, de la zone située le long du trait médian (en tirets) parallèle à l'axe X : toutes ces zones restent sensiblement à la même distance du substrat en l'absence de contact mécanique avec lui. En revanche, les zones situées de part et d'autre de ce trait en tirets se courbent vers le bas en raison de la dilatation thermique différentielle entre les parties 2A et 2B, jusqu'à ce qu'elles viennent localement en contact (ici, par l'intermédiaire des sommets des protubérances 4) avec le substrat 1 (ici, avec la couche 6'), à une température bien précise $T_c$.

Comme le montre la figure 7b entre les traits mixtes, les protubérances 4 limitent la surface de contact entre la partie suspendue 2 du microbolomètre et le substrat 1. Cette disposition facilite le retour de la partie 2 vers sa position nominale lorsque le microbolomètre se refroidit, sans quoi les forces d'adhérence surfaciques pourraient la maintenir en position plaquée au substrat.

Afin d'obtenir un contact ferme des protubérances 4 sur le réflecteur 6, il est avantageux de choisir une structure de rigidité élevée. Cette rigidité est également nécessaire pour assurer un retour vers leur position initiale des parties déformées, après que la partie 2 soit venue localement en contact avec le substrat 1 : l'énergie élastique emmagasinée dans la structure lors de la dilatation thermique pourra contribuer au « décollement » des surfaces en contact lors du refroidissement. On prévoira donc un nombre suffisant de points d'appui, et de préférence une configuration coaxiale des bras de maintien.

En revanche, la multiplication des points d'appui et des bras de maintien s'accompagne en principe d'une diminution de la résistance thermique propre du microbolomètre, ainsi que de sa surface utile, et donc de ses performances.

Une variante de réalisation de l'invention consiste à réaliser, lors d'une étape préliminaire aux étapes décrites ci-dessus, des protubérances de contact 5 sur la surface du substrat 1. Ces protubérances 5, qui sont de surface réduite par rapport à la surface du microbolomètre, peuvent le cas échéant être obtenues au moyen de la topographie naturelle du circuit de lecture, sans autre artifice ou précaution qu'un positionnement judicieux sous la partie suspendue du microbolomètre. Si l'on choisit cette variante, il peut être inutile de prévoir des protubérances 4 sur le microbolomètre, et l'on peut donc économiser le masque lithographique et les procédés associés destinés à l'élaboration des protubérances 4 (c'est-à-dire s'abstenir de graver la couche 7 lors de l'étape décrite en référence aux figures 3a et 3b).

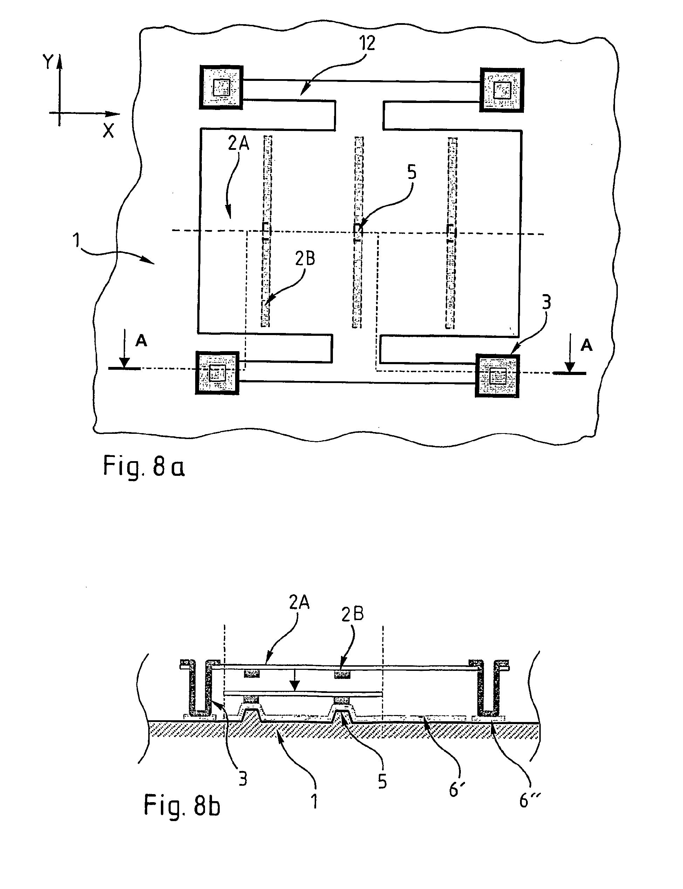

Un deuxième mode de réalisation de l'invention, représenté sur les figures 8a et 8b, consiste à mettre en oeuvre essentiellement les mêmes étapes de fabrication que le premier mode de réalisation, si ce n'est que l'on dispose les parties 2B « au-dessous » des parties 2A.

On peut, ici aussi, prévoir des protubérances 4 sur la partie suspendue, ou des protubérances 5 sur le substrat 1, ou les deux types à la fois. Sur les figures 8a et 8b, on a choisi à titre d'exemple de représenter des protubérances du deuxième type 5, qui sont situées en regard de l'axe médian (en tirets et parallèle à l'axe X sur la figure 8a) de la partie suspendue 2. La figure 8b montre entre les traits mixtes comment la partie suspendue 2 se déforme sous l'effet de la chaleur jusqu'à ce que la zone située le long de cet axe médian vienne localement au contact des protubérances 5.

Ce deuxième mode de réalisation permet, par comparaison avec le premier, de disposer plus aisément les zones de contact 4 ou 5 au voisinage du centre du microbolomètre. En effet, la déformation thermique conduit, dans ce mode de réalisation, à une surface 2 concave, de sorte que ce sont les zones situées le long dudit axe médian qui s'abaissent le plus vers le substrat 1 quand la température augmente, contrairement au premier mode de réalisation dans lequel l'élévation de température conduit à une surface 2 convexe.

On notera que les bras de maintien 12 s'étendent ici le long de la direction X perpendiculaire à la direction Y le long de laquelle s'étendent les parties 2B, afin de retenir efficacement la partie suspendue 2, lors de son abaissement central, au niveau du milieu de chaque bras 12.

Bien entendu, la nature de ces déformations est inversée si la partie 2B est réalisée avec des matériaux à coefficient de dilatation thermique plus faible que ceux de la partie 2A. L'homme de l'art a naturellement la liberté de définir ses matériaux, et aussi d'adapter les positions relatives des constituants, en fonction de ses besoins pratiques, tout en restant dans la portée de l'invention.

En particulier, dans le but de simplifier la fabrication de détecteurs de rayonnement selon l'invention, mais au prix d'une fiabilité réduite, on pourra omettre toutes les protubérances 4 et 5.

Les effets de l'invention sont illustrés (avec des échelles arbitraires) sur la figure 9, qui est un graphique de la température atteinte par un microbolomètre en fonction de la puissance P du rayonnement reçu.

Le contact mécanique, à $T = T_c$, de la partie suspendue 2 et du substrat 1 est suivi d'un abaissement de température de l'ensemble de la partie 2, par conduction thermique, puisque $T_{sub} < T_c$. On appellera $R_{thc}$ la résistance thermique de contact. $R_{thc}$ dépend de l'aire effective du contact, de la nature des matériaux en contact, de la configuration géométrique (forme des parties 2A et 2B, nombre et forme des éventuelles zones de contact au sommet des protubérances 4 ou 5), et de la nature des matériaux constituant les parties 2.

On notera à cet égard que, dans le cas où l'on choisit un mode de réalisation comportant des protubérances 4 ou 5, la limitation de la surface de contact qui en résulte a pour effet de réduire la vitesse de refroidissement de la partie suspendue 2 au contact du substrat 1. L'homme du métier devra donc rechercher le meilleur compromis entre facilité de décollement et vitesse de refroidissement.

Une fois la partie 2 au contact du substrat, la résistance thermique globale, qu'on désignera par $R_{thg}$, est constituée de deux résistances en parallèle, soit :

$$R_{thg} = R_{thc} \cdot R_{thb} / (R_{thc} + R_{thb})$$

(on rappelle que $R_{thb}$ désigne la résistance thermique « propre » du microbolomètre).

En fonction du choix des matériaux, du dessin et de la construction des divers éléments selon l'invention, l'homme de l'art pourra obtenir des résistances de contact $R_{thc}$ de l'ordre de quelques $10^5$ à $10^6$ K/W, c'est-à-dire des valeurs qui seront aisément de dix à cent fois inférieures à la résistance thermique propre du microbolomètre. La résistance thermique globale $R_{thg}$ sera donc de l'ordre de la résistance de contact $R_{thc}$.

Pour les valeurs modérées de P, la température croît linéairement, de manière classique. Pour des puissances reçues de l'ordre de $(T_c - T_{sub})/R_{thb}$, le microbolomètre selon l'invention oscille (mécaniquement et en température), à cause de l'alternance de phases de refroidissement au contact du substrat et de réchauffement après perte de contact.

Pour des valeurs supérieures de la puissance reçue, la partie 2 se maintient en permanence au contact du substrat, à une température moyenne voisine de $(T_{sub} + P \cdot R_{thg})$.

Les valeurs de $R_{thg}$ étant par hypothèse nettement inférieures à $R_{thb}$, les excursions accidentelles en température en cas de sur-éclairement sont modérées par rapport aux excursions (représentées par la droite en pointillés sur la figure 9) qu'aurait atteintes un microbolomètre classique.

Désignons par $T_d$ la température à partir de laquelle le microbolomètre doit être considéré comme détérioré ou détruit, et par $P_d$ la puissance reçue correspondante. Pour une valeur donnée de $T_d$, l'invention permet, par comparaison avec l'art antérieur, d'augmenter la puissance applicable avant destruction par un facteur égal à

$$P_{d2}/P_{d1} = R_{thb}/R_{thg},$$

facteur de l'ordre de la dizaine ou de la centaine selon les détails de construction du microbolomètre.

Dans la description ci-dessus, on a fait référence à des microbolomètres pour fixer les idées. La gamme de longueurs d'onde qu'ils peuvent détecter ne se limite nullement à l'infrarouge, et les applications de ces détecteurs concernent de multiples domaines (par exemple, la spectroscopie), et pas seulement l'imagerie.

**Revendications**

**1.** Microbblomètre comportant une partie suspendue (2) comprenant un élément sensible dont la résistance électrique varie avec la température résultant du rayonnement auquel il est soumis, le microbolomètre étant apte à mesurer la variation relative de ladite résistance électrique, **caractérisé en ce que** ladite partie suspendue (2) est constituée d'un ensemble de premières zones (2A) et d'un ensemble de secondes zones (2B), les deux ensembles étant superposés, et **en ce que** les matériaux constituant lesdites premières zones (2A) possèdent des coefficients de dilatation thermique suffisamment différents des matériaux constituant lesdites secondes zones (2B) pour que ladite partie suspendue (2) se déforme sous l'effet d'une élévation de température au point de venir au contact du substrat (1) lorsque la zone de contact atteint une température $T_c$ inférieure à la température de destruction $T_d$ du microbolomètre.

**2.** Microbolomètre selon la revendication 1, **caractérisé en ce que** lesdites premières zones (2A) sont situées « au-dessous » desdites secondes zones (2B).

**3.** Microbolomètre selon la revendication 1, **caractérisé en ce que** lesdites premières zones (2A) sont situées « au-dessus » desdites secondes zones (2B).

**4.** Microbolomètre selon l'une quelconque des revendications 1 à 3, **caractérisé en ce que** les premières zones (2A) possèdent un coefficient de dilatation thermique inférieur à celui des secondes zones (2B).

**5.** Microbolomètre selon l'une quelconque des revendications 1 à 3, **caractérisé en ce que** les premières zones (2A) possèdent un coefficient de dilatation thermique supérieur à celui des secondes zones (2B).

**6.** Microbolomètre selon l'une quelconque des revendications 1 à 5, **caractérisé en ce que** la partie suspendue (2) présente des protubérances (4) tournées vers le substrat (1).

**7.** Microbolomètre selon l'une quelconque des revendications 1 à 5,
**caractérisé en ce que** le substrat (1) présente des protubérances (5) tournées vers la partie suspendue (2).

**8.** Microbiolomètre selon l'une quelconque des revendications 1 à 7, **caractérisé en ce que** la partie suspendue (2) comprend des bras de maintien (12) reposant localement sur le substrat (1) par l'entremise de piliers (3).

**9.** Microbolomètre selon l'une quelconque des revendications 1 à 8, **caractérisé en ce que** ladite zone de contact comprend le centre de la partie suspendue (2).

**10.** Microbolomètre selon l'une quelconque des revendications 1 à 8, **caractérisé en ce que** ladite zone de contact est éloignée du centre de la partie suspendue (2).

**11.** Procédé de fabrication de microbolomètres sur un substrat (1), chaque microbolomètre comprenant un élément sensible dont la résistance électrique varie avec la température résultant du rayonnement auquel il est soumis, chaque microbolomètre étant apte à mesurer la variation relative de ladite résistance électrique, **caractérisé en ce qu'**il comprend pour chaque microbotomètre, les étapes suivantes :

- le dépôt et la gravure de plusieurs couches, dont un ensemble de couches destiné à constituer une partie suspendue (2) du microbolomètre, et
- la formation dans ladite partie suspendue (2) d'un ensemble de premières zones (2A) et d'un ensemble de secondes zones (2B), les deux ensembles étant superposés,

et **en ce que** les matériaux constituant lesdites premières zones (2A) possèdent des coefficients de dilatation thermique suffisamment différents des matériaux constituant lesdites secondes zones (2B) pour que la partie suspendue (2) se déforme sous l'effet d'une élévation de température au point de venir au contact du substrat (1) lorsque la zone de contact atteint une température $T_c$ inférieure à la température de destruction $T_d$ du microbolomètre.

**12.** Procédé de fabrication selon la revendication 11, **caractérisé en ce qu'**il comprend l'élaboration de protubérances (4) émanant de la partie suspendue (2) et tournées vers le substrat (1).

**13.** Procédé de fabrication selon la revendication 11, **caractérisé en ce qu'**il comprend l'élaboration de protubérances (5) émanant du substrat (1) et tournées vers la partie suspendue (2).

**14.** Procédé de fabrication selon l'une quelconque des revendications 11 à 13, **caractérisé en ce qu'**il comprend l'élaboration de piliers (3) reposant sur le substrat (1), et de bras (12) de la partie suspendue (2) reposant localement sur lesdits piliers (3).

**15.** Détecteur de rayonnement comprenant un ensemble de microbolomètres selon l'une quelconque des revendications 1 à 10.

**16.** Appareil d'observation ou de mesure, **caractérisé en ce qu'**il comprend au moins un détecteur de rayonnement selon la revendication 15.

**Claims**

**1.** Microbolometer comprising a suspended part (2) containing a sensitive element, the electrical resistance of which varies with the temperature resulting from the radiation to which it is subjected, the microbolometer being suitable for measuring the relative variation of said electrical resistance, **characterized**

**in that** said suspended part (2) is constituted by a set of first zones (2A) and a set of second zones (2B), the two sets being superimposed, and **in that** the materials constituting said first zones (2A) possess thermal expansion coefficients sufficiently different from the materials constituting said second zones (2B) for said suspended part (2) to be deformed under the effect of a rise in temperature to the point of coming into contact with the substrate (1) when the contact zone reaches a temperature $T_c$ below the destruction temperature $T_d$ of the microbolometer.

**2.** Microbolometer according to claim 1, **characterized in that** said first zones (2A) are situated "below" said second zones (2B).

**3.** Microbolometer according to claim 1, **characterized in that** said first zones (2A) are situated "above" said second zones (2B).

**4.** Microbolometer according to any one of claims 1 to 3, **characterized in that** the first zones (2A) possess a thermal expansion coefficient smaller than that of the second zones (2B).

**5.** Microbolometer according to any one of claims 1 to 3, **characterized in that** the first zones (2A) possess a thermal expansion coefficient greater than that of the second zones (2B).

**6.** Microbolometer according to any one of claims 1 to 5, **characterized in that** the suspended part (2) has protuberances (4) turned towards the substrate (1).

**7.** Microbolometer according to any one of claims 1 to 5, **characterized in that** the substrate (1) has protuberances (4) turned towards the suspended part (2).

**8.** Microbolometer according to any one of claims 1 to 7, **characterized in that** the suspended part (2) includes support arms (12) resting locally on the substrate (1) by means of struts (3).

**9.** Microbolometer according to any one of claims 1 to 8, **characterized in that** said contact zone includes the centre of the suspended part (2).

**10.** Microbolometer according to any one of claims 1 to 8, **characterized in that** said contact zone is remote from the centre of the suspended part (2).

**11.** Method for manufacturing microbolometers on a substrate (1), each microbolometer comprising a sensitive element the electrical resistance of which varies with the temperature resulting from the radiation to which it is subjected, each microbolometer being capable of measuring the relative variation of said electrical resistance, **characterized in that** it comprises, for each microbolometer, the following steps:

- the deposition and etching of several layers, including a set of layers Intended to constitute a suspended part (2) of the microbolometer, and
- the formation in said suspended part (2) of a set of first zones (2A) and a set of second zones (2B), the two sets being superimposed,

and **in that** the materials constituting said first zones (2A) possess thermal expansion coefficients sufficiently different from the materials constituting said second zones (2B) for the suspended part (2) to be deformed under the effect of a rise in temperature to the point of coming into contact with the substrate (1) when the contact zone reaches a temperature $T_c$ below the destruction temperature $T_d$ of the microbolometer.

12. Manufacturing method according to claim 11, **characterized in that** it includes the production of protuberances (4) emanating from the suspended part (2) and turned towards the substrate (1).

13. Manufacturing method according to claim 11, **characterized in that** it includes the production of protuberances (5) emanating from the substrate (1) and turned towards the suspended part (2).

14. Manufacturing method according to any one of claims 11 to 13, **characterized in that** it includes the production of struts (3) resting on the substrate (1) and of arms (12) of the suspended part (2) resting locally on said struts (3).

15. Radiation detector comprising an array of microbolometers according to any one of claims 1 to 10.

16. Observation or measuring apparatus, **characterized in that** it includes at least one radiation detector according to claim 15.


**Patentansprüche**

1. Mikrobolometer, umfassend einen aufgehängten Teil (2), der ein empfindliches Element umfasst, dessen elektrischer Widerstand sich mit der Temperatur ändert, die sich durch die Strahlung, der es ausgesetzt ist, ergibt, wobei das Mikrobolometer in der Lage ist, die relative Änderung dieses elektrischen Widerstands zu messen, **dadurch gekennzeichnet, dass** der aufgehängte Teil (2) aus einer Einheit von ersten Zonen (2A) und einer Einheit von zweiten Zonen (2B) besteht, wobei die beiden Einheiten übereinander angeordnet sind, und dass die die ersten Zonen (2A) bildenden Werkstoffe Wärmeausdehnungskoeffizienten besitzen, die von den die zweiten Zonen (2B) bildenden Werkstoffen so verschieden sind, dass der aufgehängte Teil (2) sich unter der Wirkung einer Temperaturerhöhung so stark verformt, dass er mit dem Substrat (1) in Kontakt kommt, wenn die Kontaktzone eine Temperatur $T_c$ erreicht, die niedriger als die Zerstörungstemperatur $T_d$ des Mikrobolometers ist.

2. Mikrobolometer nach Anspruch 1, **dadurch gekennzeichnet, dass** die ersten Zonen (2A) "unter" den zweiten Zonen (2B) gelegen sind.

3. Mikrobolometer nach Anspruch 1, **dadurch gekennzeichnet, dass** die ersten Zonen (2A) "über" den zweiten Zonen (2B) gelegen sind.

4. Mikrobolometer nach einem der Ansprüche 1 bis 3, **dadurch** gekenzeichnet, dass die ersten Zonen (2A) einen Wärmeausdehnungskoeffizienten besitzen, der niedriger als der der zweiten Zonen (2B) ist.

5. Mikrobolometer nach einem der Ansprüche 1 bis 3, **dadurch** gekenzeichnet, dass die ersten Zonen (2A) einen Wärmeausdehnu.ngskoeffizienten besitzen, der höher als der der zweiten Zonen (2B) ist.

6. Mikrobolometer nach einem der Ansprüche 1 bis 5, **dadurch gekennzeichnet, dass** der aufgehängte Teil (2) dem Substrat (1) zugewandte Erhebungen (4) aufweist.

7. Mikrobolometer nach einem der Ansprüche 1 bis 5, **dadurch gekennzeichnet, dass** das Substrat (1) dem aufgehängten Teil (2) zugewandte Erhebungen (5) aufweist.

8. Mikrobolometer nach einem der Ansprüche 1 bis 7, **dadurch gekennzeichnet, dass** der aufgehängte Teil (2) Haltearme (12) umfasst, die örtlich auf dem Substrat (1) über Pfeiler (3) aufliegen.

9. Mikrobolometer nach einem der Ansprüche 1 bis 8, **dadurch gekennzeichnet, dass** die Kontaktzone die Mitte des aufgehängten Teils (2) umfasst.

10. Mikrobolometer nach einem der Ansprüche 1 bis 8, **dadurch gekennzeichnet, dass** die Kontaktzone von der Mitte des aufgehängten Teils (2) entfernt ist.

11. Verfahren zur Herstellung von Mikrobolometern auf einem Substrat (1), wobei jedes Mikrobolometer ein empfindliches Element umfasst, dessen elektrischer Widerstand sich mit der Temperatur ändert, die sich durch die Strahlung, der es ausgesetzt ist, ergibt, wobei jedes Mikrobolometer in der Lage ist, die relative Änderung dieses elektrischen Widerstands zu messen, **dadurch gekennzeichnet, dass** es für jedes Mikrobolometer die folgenden Schritte umfasst:

- den Auftrag und die Gravur von mehreren Schichten, von denen eine Einheit von Schichten dazu bestimmt ist, einen aufgehängten Teil (2) des Mikrobolometers zu bilden, und
- die Bildung einer Einheit von ersten Zonen (2A) und einer Einheit von zweiten Zonen (2B) in diesem aufgehängten Teil (2), wobei die beiden Einheiten übereinander angeordnet sind, und dass die die ersten Zonen (2A) bildenden Werkstoffe Wärmeausdehnungskoeffizienten besitzen, die von den die zweiten Zonen (28) bildenden Werkstoffen so verschieden sind, dass der aufgehängte Teil (2) sich unter der Wirkung einer Temperaturerhöhung so stark verformt, dass er mit dem Substrat (1) in Kontakt kommt, wenn die Kontaktzone eine Temperatur $T_c$ erreicht, die niedriger als die Zerstörungstemperatur $T_d$ des Mikrobolometers ist.

12. Herstellungsverfahren nach Anspruch 11, **dadurch gekennzeichnet, dass** es die Herstellung der von dem aufgehängten Teil (2) ausgehenden und dem Substrat (1) zugewandten Erhebungen (4) umfasst.

13. Herstellungsverfahren nach Anspruch 11, **dadurch gekennzeichnet, dass** es die Herstellung von von dem Substrat (1) ausgehenden und dem aufgehängten Teil (2) zugewandte Erhebungen (5) umfasst.

14. Herstellungsverfahren nach einem der Ansprüche 11 bis 13, **dadurch gekennzeichnet, dass** es die Herstellung von auf dem Substrat (1) aufliegenden Pfeilern (3) und von örtlich auf den Pfeilern (3) aufliegenden Armen (12) des aufgehängten Teils (2) umfasst.

15. Strahlendetektor, umfassend eine Einheit von Mikrobolometern nach einem der Ansprüche 1 bis 10.

16. Beobachtungs- oder Messgerät, **dadurch gekennzeichnet, dass** es mindestens einen Strahlungsdetektor nach Anspruch 15 umfasst.

Fig. 1

Fig. 9

Fig. 2a

Fig. 2b

Fig. 3a

Fig. 3b

Fig. 4a

Fig. 4b

Fig. 5a

Fig. 5b

Fig. 6a

Fig. 6b

Fig. 7a

Fig. 7b

Fig. 8 a

Fig. 8b

**EP 1 399 722 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6080988 A

- WO 0040938 A